# EUROPEAN PATENT SPECIFICATION

(11) **EP 4 429 332 B1**
(45) Date of publication and mention of the grant of the patent: **08.04.2026**
(21) Application number: 22909027.9
(22) Date of filing: 14.02.2022
(51) Int. Cl.: H04W 52/02

(54) **OPERATION MODE ADJUSTMENT METHOD, STORAGE MEDIUM AND ELECTRONIC APPARATUS**
VERFAHREN ZUR BETRIEBSMODUSEINSTELLUNG SOWIE SPEICHERMEDIUM UND ELEKTRONISCHE VORRICHTUNG
PROCÉDÉ DE RÉGLAGE DE MODE DE FONCTIONNEMENT, SUPPORT DE STOCKAGE ET APPAREIL ÉLECTRONIQUE

(30) Priority: 21.12.2021 CN 202111576290
(43) Date of publication of application: 11.09.2024
(73) Proprietor: ZTE Corporation, Shenzhen, Guangdong Province 518057 (CN)
(72) Inventor: LI, Yan, Shenzhen, Guangdong 518057 (CN)
(74) Representative: Mozzi, Matteo
(86) International application number: PCT/CN2022/076204
(87) International publication number: WO 2023/115683

(56) References cited:
- WO-A1-2021/175308
- WO-A1-2021/175308
- CN-A- 101 754 479
- CN-A- 101 754 479
- CN-A- 112 492 698
- CN-A- 113 395 746
- CN-A- 113 395 751
- CN-A- 113 766 613
- US-A1- 2021 377 851

## Description

### Technical Field

The disclosure relates to the field of communication, and in particular to a method and apparatus for adjusting an operation mode, a storage medium, and an electronic apparatus.

### Background

In multi-link transmission, if a station (STA) on a certain determined link is set in a power save state, a wireless access point (AP) will buffer a groupcast message to be transmitted. After a beacon that carries a delivery traffic indication map (DTIM) arrives next time and an STA positioned in a doze state is awakened, the AP will transmit the groupcast message buffered. For an STA set in an active state on the link, obvious delay will be caused, and a user will accordingly experience obvious jamming when a groupcast service such as an Internet protocol television (IPTV) is used.

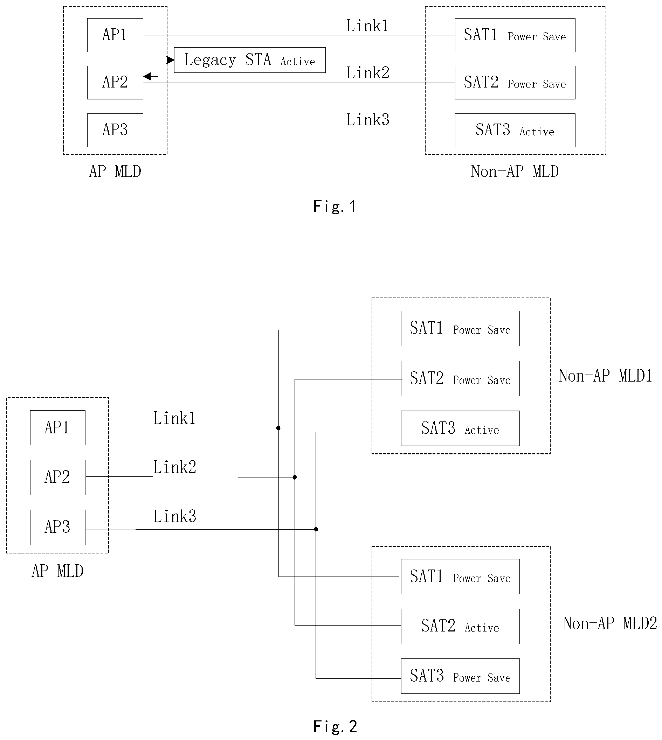

For example, on a communication link between the AP and a legacy STA as well as a non-AP multi-link device (MLD) in scenario 1, as shown in Fig. 1, STA 3 in the non-AP MLD is set in an active mode to receive a groupcast data frame on link 3. Moreover, link 1 and link 2 are set in a power save mode. The legacy STA is associated with the AP through link 2 and is set in an active mode. Groupcast transmission on link 2 proceeds as follows: since STA 2 operating on link 2 in the non-AP MLD is set in a power save mode, it will be actively awakened to receive the groupcast data frame only after the beacon carrying the DTIM arrives. Therefore, although the legacy STA set in the active mode can receive the groupcast data frame at any time, under the impact of STA 2, the AP will buffer the groupcast data frame and will not transmit it until the beacon carrying the DTIM arrives. In consequence, the legacy STA have obvious delay when receiving the groupcast data frame. A delay length equals a transmission period of the beacon carrying the DTIM, which is generally in a range of 100 ms to 1 s. In scenario 2, as shown in Fig. 2, non-AP MLD 1 and non-AP MLD 2 have each three links associated with the AP MLD, two of which have STAs set in a power save mode, and one of which has an STA positioned in an active mode. Especially, the links where the STAs in the active mode are positioned are inconsistent. On a link where AP 2 is positioned, STA 2 of non-AP MLD 1 is set in the power save mode, and STA 2 of non-AP MLD 2 is set in the active mode. It can be seen from the analysis of scenario 1 that AP 2 will buffer a groupcast data frame, resulting in obvious groupcast reception delay of STA 2 of non-AP MLD 2. Similarly, on a link where AP 3 is positioned, STA 3 of non-AP MLD 1 also has obvious groupcast reception delay.

In conclusion, in a groupcast transmission scenario involving the non-AP MLD, if there is inconsistency (coexistence of the power save mode and the active mode) in power management mode between multiple devices on a certain link, the AP will buffer groupcast data, resulting in obvious groupcast transmission delay.

CN 101754479 A provides a method and a device for transmitting multicast/broadcast message through wireless access point.

In view of the related technical solutions, owing to different power operation modes of stations, groupcast transmission delay is likely to be caused, but no effective solution has been provided yet.

Therefore, it is a pressing issue to improve the related technical solutions, so as to overcome relevant defects.

### Summary

A method and apparatus for adjusting an operation mode, a storage medium, and an electronic apparatus are provided in examples of the disclosure, so as to at least solve the related technical problems to a certain extent, including groupcast transmission delay that is likely to be caused by different power operation modes of stations.

The invention is defined in the appended claims.

### Brief Description of the Drawings

The accompanying drawings described herein are used for providing further understanding of the disclosure as a constituent part of the disclosure. Some examples of the disclosure and their descriptions serve to explain the disclosure, instead of limiting the disclosure improperly. In the accompanying drawings:
Fig. 1 is a first schematic diagram of a link having groupcast delay in the related technical solution;
Fig. 2 is a second schematic diagram of a link having groupcast delay in the related technical solution;
Fig. 3 is a schematic diagram of unicast and groupcast/broadcast transmission mechanisms In an embodiment of the disclosure;
Fig. 4 is a schematic diagram of a process of reporting a station (STA) power management mode In an embodiment of the disclosure;
Fig. 5 is a structural block diagram of hardware of a computer terminal of a method for adjusting an operation mode In an embodiment of the disclosure;
Fig. 6 is a flowchart of a method for adjusting an operation mode In an embodiment of the disclosure;
Fig. 7 is a schematic diagram of a link having groupcast delay In an embodiment of the disclosure; and
Fig. 8 is a structural block diagram of an apparatus for adjusting an operation mode In an embodiment of the disclosure.

### Detailed Description of the Embodiments

In order to enable those skilled in the art to better understand solutions of the disclosure, the technical solutions in examples of the disclosure will be clearly and comprehensively described below in conjunction with the accompanying drawings In the embodiments of the disclosure. Apparently, the examples described are merely some examples rather than all examples of the disclosure. Based on the examples of the disclosure, all other examples derived by those of ordinary skill in the art without creative efforts should fall within the scope of protection of the disclosure.

It should be noted that the terms "first", "second", etc. in the description of the disclosure, the claims, and the above accompanying drawings are used to distinguish between similar objects, instead of necessarily describing a particular sequence or a successive order. It should be understood that data used in this way can be interchanged where appropriate, so that the examples of the disclosure described herein may be implemented in other sequences than those illustrated or described herein. In addition, the terms "comprise", "include", "have", and their any variations are intended to cover non-exclusive inclusion. For example, processes, methods, systems, products, or devices encompassing a series of steps or units can include other steps or units that are not explicitly listed or are inherent to these processes, methods, products, or devices, without being limited to those steps or units explicitly listed.

The technical terms in the disclosure are explained as follows.

A power management mode includes: an active mode and a power save mode. In the active mode, an STA may transmit and receive frames at any time and maintain an awake state at all moments. In the power save mode, an STA may transmit and receive frames in certain periods and is positioned in a doze state at other moments. Specifically:
1) awake state: only when a beacon carrying a traffic indication map (TIM) and a delivery traffic indication map (DTIM) arrives, the STA will enter the awake state and may transmit and receive the frames in the awake state; and
2) doze state: the STA enters the doze state at other moments and may not transmit and receive the frames.

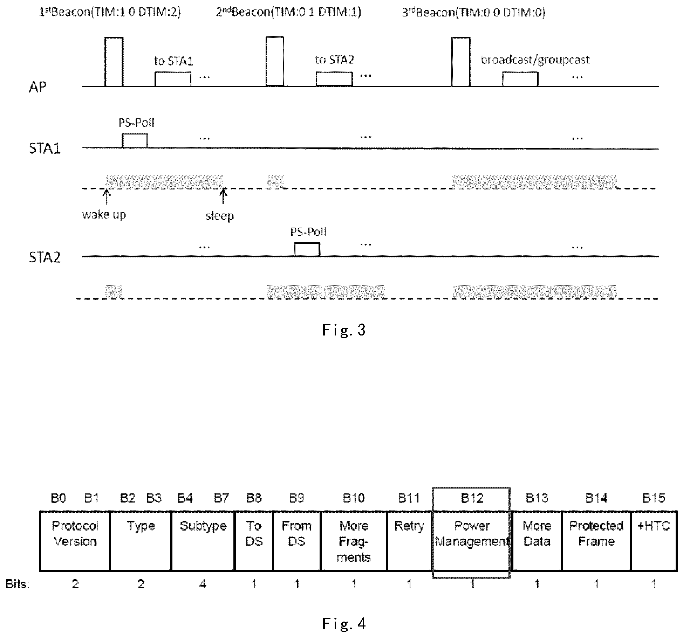

Unicast and groupcast/broadcast transmission mechanisms in the power save mode are described in conjunction with Fig. 3. As shown in Fig. 3, before a first beacon is transmitted, STA 1 and STA 2 are awake. After the beacon is received, only a unicast buffer message of STA 1 is found. In this case, STA 2 enters the doze mode, and STA 1 transmits a PS-Poll trigger to perform unicast data interaction with an access point (AP). STA 1 enters the doze mode after unicast data buffered at the AP are transmitted completely. Before a second beacon is transmitted, STA 1 and STA 2 are awake. After the beacon is received, only a unicast buffer message of STA 2 is found. In this case, STA 1 enters the doze mode, and STA 2 transmits a PS-Poll trigger to perform data interaction with the AP. STA 2 enters the doze mode after data buffered at the AP are transmitted completely. When a third beacon arrives, STA 1 and STA 2 are awake. Although no unicast data frames buffered by the AP for STA 1 and STA 2 are found through the TIM, it is found that DTIM=0, indicating that the AP is about to transmit broadcast and groupcast frames. Therefore, STA 1 and STA 2 maintain the awake state to wait to receive the broadcast and groupcast frames.

A multi-link groupcast transmission mechanism means that an AP multi-link device (MLD) transmits the same groupcast data frame on all enabled links.

A process of reporting an STA power management mode is described in conjunction with Fig. 4. As shown in Fig. 4, the STA carries its power management state in an intra-frame power management field. Setting the power management state to 1 indicates the power save mode, and setting the power management state to 0 indicates the active mode.

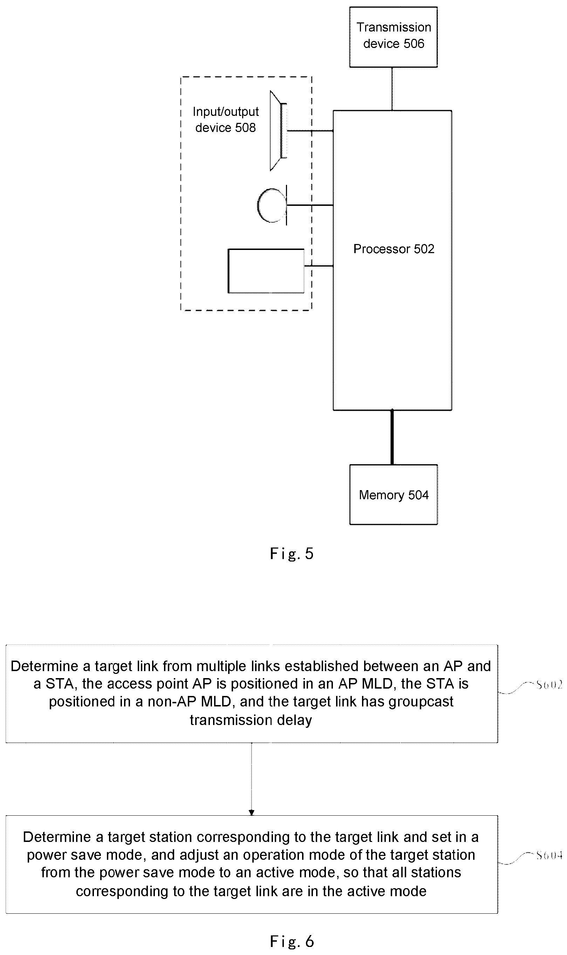

A method example according to the example of the disclosure may be executed in a computer terminal or a similar computation apparatus. With running on the computer terminal as an example, Fig. 5 is a structural block diagram of hardware of a computer terminal of a method for adjusting an operation mode In an embodiment of the disclosure. As shown in Fig. 5, the computer terminal may include one or more processors 502 (only one processor is shown in Fig. 5) and a memory 504 configured to store data, where the processor 502 may include, but is not limited to, a microprocessor unit (MPU) or a programmable logic device (PLD). In an embodiment, the above computer terminal may further include a transmission device 506 configured for a communication function and an input/output device 508. Those of ordinary skill in the art can understand that the structure shown in Fig. 5 is merely illustrative and is not intended to limit the structure of the above computer terminal. For example, the computer terminal may further include more or fewer components than those shown in Fig. 5 or have different configurations with equivalent functions or more functions compared to those shown in Fig. 5.

The memory 504 may be configured to store a computer program, for example, a software program and a module of application software, such as a computer programs corresponding to the method for adjusting an operation mode In the embodiment of the disclosure. The processor 502 runs the computer program stored in the memory 504 to execute various functional applications and data processing, that is, realize the above method. The memory 504 may include a high-speed random access memory, and may further include a non-volatile memory, such as one or more magnetic storage apparatuses, flash memories, or other non-volatile solid-state memories. In some instances, the memory 504 may further include memories remotely configured relative to the processor 502. These remote memories may be connected to the computer terminal through a network. The instances of the above network include, but are not limited to, the Internet, an intranet, a local area network, a mobile communication network, and their combinations.

The transmission device 506 is configured to receive or transmit data via one network. The specific instances of the above network may include a wireless network provided by a communication provider of the computer terminal. In an instance, the transmission device 506 includes a network interface controller (NIC) that may be connected to other network devices through a base station to communicate with the Internet. In an instance, the transmission device 506 may be a radio frequency (RF) module, which is configured to communicate with the Internet wirelessly.

Fig. 6 is a flowchart of a method for adjusting an operation mode In an embodiment of the disclosure. As shown in Fig. 6, the method includes:
S602, a target link is determined from multiple links established between an access point (AP) and a station (STA), where the access point (AP) is positioned in an AP multi-link device (MLD), the station (STA) is positioned in a non-access point (non-AP) MLD, and the target link has groupcast transmission delay; and
S604, a target station corresponding to the target link and set in a power save mode is determined, and an operation mode of the target station is adjusted from the power save mode to an active mode, so that all stations corresponding to the target link are in the active mode.

In the embodiment of the disclosure, the target link is determined from the multiple links established between the access point (AP) and the station (STA); and the target station corresponding to the target link and set in the power save mode is determined, and the operation mode of the target station is adjusted from the power save mode to the active mode, so that all the stations corresponding to the target link are in the active mode. Accordingly, groupcast transmission delay that is likely to be caused by different power operation modes of the stations is solved.

In an embodiment, in order to better understand the way to determine the target link from the multiple links established between the access point (AP) and the station (STA) in S602, operation modes of all stations in the multiple links established between the access point (AP) and the station (STA) may be acquired, where the operation modes include at least one of the active mode and the power save mode; at least one link having groupcast transmission delay is determined from the multiple links according to the operation modes of all the stations; and the target link is determined from the at least one link according to a preset selection criterion.

In an embodiment, a technical solution in which at least one link having groupcast transmission delay is determined from the multiple links according to the operation modes of all the stations is specifically provided as follows: in a case that a legacy STA associated with an AP corresponding to any one of the multiple links is determined, an operation mode of the legacy STA is the active mode, and an STA corresponding to any one of the multiple links and positioned in the non-AP MLD is in the power save mode, any one of the multiple links is determined as at least one link having groupcast transmission delay.

In an embodiment, a technical solution in which at least one link having groupcast transmission delay is determined from the multiple links according to the operation modes of all the stations is specifically provided as follows: in a case that an operation mode of an STA in non-AP MLD 1 corresponding to any one of the multiple links is the active mode, and an operation mode of an STA in non-AP MLD 2 corresponding to any one of the multiple links is the power save mode, any one of the multiple links is determined as at least one link having groupcast transmission delay.

In an embodiment, in response to determining that any one of the multiple links has the groupcast transmission delay, the non-AP MLD corresponding to the multiple links is determined as having delay.

It should be noted that In an embodiment, the multiple links established between the access point (AP) and the station (STA) may transmit the same message and serve as backup communication links for one another. Accordingly, only in response to determining that the multiple links have the groupcast delay, the target link is determined from the multiple links.

In an embodiment, a technical solution in which the target link is determined from the at least one link according to a preset selection criterion is specifically provided as follows: a link scenario of the at least one link is acquired; in a case that the link scenario encompasses a legacy STA and the non-AP MLD, a link where the legacy STA is positioned is determined as the target link; and/or in a case that the link scenario encompasses multiple non-AP MLDs, a link where a non-AP MLD whose operation mode is the active mode is positioned is determined as the target link.

In an embodiment, a technical solution in which the target link is determined from the at least one link according to a preset selection criterion is specifically provided as follows: in a case that the at least one link indicates multiple links, parameter information of the at least one link is acquired, where the parameter information includes at least one of power consumption information, interference information, load information, STA compatibility information, and priority information; and the target link is determined from the at least one link according to the parameter information.

In an embodiment, a technical solution in which the target link is determined from the at least one link according to the parameter information is specifically provided as follows: an operation mode of the at least one link is determined as the active mode in a case that the parameter information is the power consumption information; and the link is switched through a link switch function to maintain an operation mode of only one of the at least one link as the active mode, and the one link whose operation mode is the active mode is taken as the target link.

In an embodiment, a technical solution in which the target link is determined from the at least one link according to the parameter information is specifically provided as follows: in a case that the parameter information is the interference information, one link having minimum interference is determined from the at least one link according to the interference information; and the one link having minimum interference is determined as the target link.

In an embodiment, a technical solution in which the target link is determined from the at least one link according to the parameter information is specifically provided as follows: in a case that the parameter information is the load information, one link having a minimum load is determined from the at least one link according to the load information; and the one link having a minimum load is determined as the target link.

In an embodiment, a technical solution in which the target link is determined from the at least one link according to the parameter information is specifically provided as follows: in a case that the parameter information is the STA compatibility information, one link allowed to be compatible with the STA is determined from the at least one link according to the STA compatibility information; and the one link allowed to be compatible with the STA is determined as the target link.

In an embodiment, a technical solution in which the target link is determined from the at least one link according to the parameter information is specifically provided as follows: in a case that the parameter information is the priority information, one link whose priority information is a first priority is determined from the at least one link according to the priority information, where the first priority is configured to denote a priority of the legacy STA; and the one link whose priority information is the first priority is determined as the target link.

In an embodiment, in order to better understand the way to adjust the operation mode of the target station from the power save mode to the active mode in S604, a multi-link power management (MLPM) bitmap field may be carried in a beacon frame, where a first value in the MLPM bitmap field is configured to indicate the active mode, and a second value in the MLPM bitmap field is configured to indicate the power save mode; and the beacon frame carrying the MLPM bitmap field is transmitted to a non-AP MLD where the target station is positioned, and the non-AP MLD where the target station is positioned is instructed to adjust the operation mode of the target station from the power save mode to the active mode according to the beacon frame carrying the MLPM bitmap field.

In an embodiment, a technical solution in which an operation mode of the target station is adjusted from the power save mode to an active mode is further specifically provided as follows: a multi-link power management request frame is transmitted to a non-AP MLD where the target station is positioned, where the multi-link power management request frame is configured to instruct the non-AP MLD where the target station is positioned to adjust the operation mode of the target station from the power save mode to the active mode; in a case that the non-AP MLD where the target station is positioned approves an adjustment of the operation mode of the target station from the power save mode to the active mode, response information transmitted by the non-AP MLD where the target station is positioned is received, so that the non-AP MLD where the target station is positioned is determined as confirming the adjustment of the operation mode of the target station from the power save mode to the active mode; and in a case that the non-AP MLD where the target station is positioned does not approve the adjustment of the operation mode of the target station from the power save mode to the active mode, a recommended adjustment mode transmitted by the non-AP MLD where the target workstation is positioned is received, where the recommended adjustment mode is configured to indicate station 1 adjusted from the power save mode to the active mode and station 2 adjusted from the active mode to the power save mode under an approval from the non-AP MLD where the target station is positioned.

The method for adjusting an operation mode is further described below in conjunction with the examples as follows.

In an embodiment, a groupcast delay determination criterion is specifically provided as follows:
Determination criterion 1: for a link where the legacy STA is positioned, if an STA on the link in a certain non-AP MLD is set in the power save mode, the legacy STA is determined as having groupcast transmission delay.

Determination criterion 2: for a link where a certain STA set in the active mode in the non-AP MLD is positioned, if STAs on the link in other non-AP MLDs are set in the power save mode, the STA in the non-AP MLD is determined as having groupcast transmission delay. For links where all STAs set in the active mode in the non-AP MLD are positioned, if the links where all the STAs set in the active mode are positioned have the groupcast transmission delay mentioned in determination criterion 1, the non-AP MLD is determined as having groupcast transmission delay.

When the legacy STA has the groupcast transmission delay or the non-AP MLD has the groupcast transmission delay in a groupcast transmission scenario, one or two of the following two solutions may be employed to solve the delay.

It should be noted that the AP may collect and update states of the power management modes of the legacy STA and the non-AP MLD in real time (a power management field carried in a transmission frame of the STA identifies an operation state of the STA). Moreover, the AP determines whether the legacy STA and the non-AP MLD that join a groupcast group have the groupcast delay only, and devices that have not joined the groupcast group are out of a determination range.

In an embodiment, a target link selection criterion is specifically provided as follows:
Selection criterion 1: single choice:
In the scenario involving the legacy STA and the non-AP MLD, the link where the legacy STA is positioned is selected as the target link, and the AP adjusts other non-AP MLDs to ensure that the STA operating on the target link is set in the active mode.
In the scenario involving multiple non-AP MLDs, a link where an STA set in the active mode in one non-AP MLD is positioned is selected as the target link, and the AP adjusts remaining non-AP MLDs to ensure that the STA operating on the target link is set in the active mode.
Selection criterion 2: comprehensive factor based choice: The target link is finally decided in comprehensive consideration of the load, interference, power save, STA compatibility, etc. on each link of the AP (see Example 3 for the specific implementation).

Power management mode adjustment methods are provided In an embodiment and may be specifically described in conjunction with Tables 1- 7 as follows:
Method 1: the AP carries a multi-link power management bitmap in the beacon frame. As shown in Table 1, the following fields are newly added to an A-control field: when the AP buffers groupcast data on all the links, the MLPM field is carried in the beacon frame subsequently.

**Table 1 A-Control**

| Control ID value | Meaning | Length of the Control Information subfield (bits) | Content of the Control Information subfield |
|---|---|---|---|
| 12 | multi-link power management (MLPM) | 20 | Control Information subfield format in a MLPM Control subfield (see Table 2) |

**Table 2 Control Information subfield format in a MLPM Control subfield**

| | |
|---|---|
| multi-link power management Bitmap | Reserved |

The bitmap field indicates the power management requirements of the AP for the STA. A corresponding bit of 0 indicates that the STA is required to be in the active mode on the link, and a corresponding bit of 1 indicates that the STA is required to be in the power save mode on the link. For example, the bitmap of 1010 0000 0000 0000 indicates that the AP requires link 1 and link 3 for the STA to be in the power save mode and other links to be in the active mode.

Method 2: the power management mode is negotiated between the AP and the STA through a newly-added unicast action frame. As shown in Tables 3-7,

**Table 3 ML Power Management Request frame Action field format**

| Value | Meaning |
|---|---|
| 6 | ML Power Management Request |
| 7 | ML Power Management Response |

**Table 4 ML Power Management Response frame Action field format**

| Order | Information |
|---|---|
| 1 | Category |
| 2 | Extremely high throughput (EHT) Action |
| 3 | Dialog Token |
| 4 | Status Code |
| 5 | ML Power Management element |

**Table 5 ML Power Management element**

| | |
|---|---|
| multi-link power management Bitmap | Reserved |

**Table 6 ML Power Management Response frame Action field format**

| Order | Information |
|---|---|
| 1 | Category |
| 2 | EHT Action |
| 3 | Dialog Token |
| 4 | Status Code |
| 5 | ML Power Management element |

**Table 7 Status Code**

| Value | Information |
|---|---|
| 0 | Successful |
| 1 | Unspecific failure |
| ... | ... |
| 135 | Preferred multi-link power management Bitmap suggested |

For example, In an embodiment, the AP transmits an ML power management request frame action to the STA, and the multi-link power management Bitmap carried in the frame indicates the power management requirement for each link of the STA. The STA replies the AP with an ML power management response frame action. When the status denotes 135, the multi-link power management Bitmap recommended by the STA and carried in the frame action is replied to the AP. The AP may refer to the bitmap to re-initiate a request subsequently.

According to the above example, the AP is not required to buffer the groupcast data frame on the link having the groupcast delay by coordinating the power management mode of the STA on each link in the non-AP MLD, so that the groupcast transmission delay is solved. In addition, in the above technical solution, by identifying the operation state of the STA in the power management field of the transmission frame of the STA, the AP may collect and update the state of the power management modes of the legacy STA and the non-AP MLD in real time.

It should be noted that the AP determines whether the legacy STA and the non-AP MLD that join the groupcast group have the groupcast delay only, and devices that have not joined the groupcast group are out of the determination range.

### Embodiment 1

In the embodiment, a process of reducing the groupcast delay of the legacy STA and a process of reducing the groupcast delay of the single non-AP MLD are specifically described in conjunction with Fig. 1 as follows:
Step 1: the groupcast delay is determined. For link 2, if the legacy STA is position in the active mode, and STA 2 in the non-AP MLD is set in the power save mode, it can be seen from groupcast delay determination standard 1 that the legacy STA has the groupcast transmission delay.
Step 2: the target link is selected: link 2 is determined as the target link according to selection criterion 1.
Step 3: the power management mode of the STA is adjusted as follows:
   Method 1: the AP MLD carries an MLPM field in the beacon frame, where a multi-link power management Bitmap is set to 1010 0000 0000 0000. The non-AP MLD is advised to adjust STA 2 to the active mode and STA 3 to the power save mode. Therefore, it is ensured that no STA on link 2 is set in the power save mode, so that AP2 is not required to buffer the groupcast data frame, and the delay is solved.
   Method 2: the AP MLD actively transmits an ML power management request frame, where a multi-link power management Bitmap is set to 1010 0000 0000 0000. The non-AP MLD is advised to adjust STA 2 to the active mode and STA 3 to the power save mode.

In an embodiment, if approving the adjustment method, the non-AP MLD replies with an ML power management response frame carrying a status of 0, indicating successful.

In an embodiment, if not approving the adjustment method, the non-AP MLD replies with an ML power management response frame carrying a status of 135 and an ML power management element, which includes a bitmap adjustment method recommended by the non-AP MLD. The AP MLD may re-initiate the request through a recommended bitmap subsequently.

### Embodiment 2

In the embodiment, a process of reducing groupcast delay of multiple non-AP MLDs is specifically described in conjunction with Fig. 2 as follows:
Step 1: the groupcast delay is determined. A determination process of the groupcast delay is as follows: for link 2, if STA 2 in non-AP MLD 1 is set in the power save mode, and STA 2 in non-AP MLD 2 is set in the active mode, it can be seen from groupcast delay determination standard 2 that non-AP MLD 2 has the groupcast transmission delay. For link 3, if STA 3 in non-AP MLD 1 is set in the active mode, and STA 3 in non-AP MLD 2 is set in the power save mode, it can be seen from groupcast delay determination standard 2 that non-AP MLD 1 has the groupcast transmission delay.
Step 2: the target link is selected: link 2 is determined as the target link according to selection criterion 1.
Step 3: the power management mode of the STA is adjusted as follows:
   Method 1: the AP MLD carries an MLPM field in the beacon frame, where a multi-link power management Bitmap is set to 1010 0000 0000 0000. All the non-AP MLDs are advised to adjust STAs 2 to the active mode and STAs 3 to the power save mode. Therefore, it is ensured that no STA on link 2 is set in the power save mode, so that AP 2 is not required to buffer the groupcast data frame, and the delay is solved.
   Method 2: the AP MLD actively transmits an ML power management request frame, where a multi-link power management Bitmap is set to 1010 0000 0000 0000. Then, non-AP MLD 1 is advised to adjust STA 2 to the active mode and STA 3 to the power save mode.

In an embodiment, if approving the adjustment method, non-AP MLD 1 replies with an ML power management response frame carrying a status of 0, indicating successful.

In an embodiment, if not approving the adjustment method, the non-AP MLD replies with an ML power management response frame carrying a status of 135 and an ML power management element, which encompasses a bitmap adjustment method recommended by the non-AP MLD. The AP MLD may re-initiate the request through a recommended bitmap subsequently or initiate new requests for multiple non-AP MLDs in comprehensive consideration of the power management mode of non-AP MLD 2.

### Embodiment 3

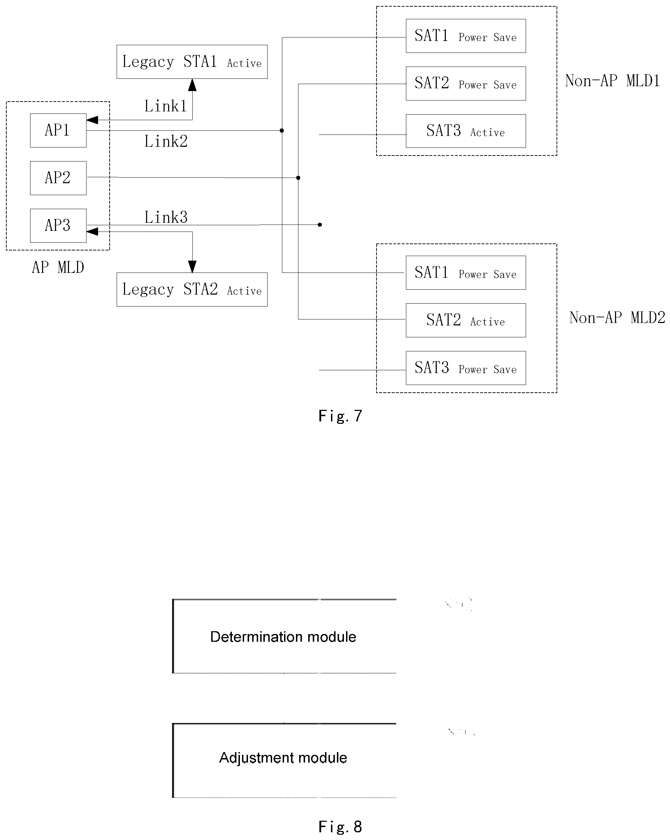

In the embodiment, a process of reducing groupcast delay of multiple legacy STAs and a process of reducing groupcast delay of multiple non-AP MLDs are specifically described in conjunction with Fig. 7 as follows:
Step 1: the groupcast delay is determined. Specifically:
for link 1, if legacy STA 1 is set in the active mode, and STAs, on the link, of non-AP MLD 1 and non-AP MLD 2 are set in the power save mode, it can be seen from groupcast delay determination standard 1 that legacy STA 1 has the groupcast transmission delay.

For link 2, if STA 2 in non-AP MLD 1 is set in the power save mode, and STA 2 in non-AP MLD 2 is set in the active mode, it can be seen from groupcast delay determination standard 2 that non-AP MLD 2 has the groupcast transmission delay.

For link 3, if STA 3 in non-AP MLD 1 is set in the active mode, and STA 3 in non-AP MLD 2 is set in the power save mode, it can be seen from groupcast delay determination standard 2 that non-AP MLD 1 has the groupcast transmission delay.

Step 2: the target link is selected. Specifically, link 1 and link 3 are determined as the target links according to selection criterion 1.

Step 3: the power management mode is adjusted as follows:
Method 1: the AP MLD carries an MLPM field in the beacon frame, where a multi-link power management Bitmap is set to 0100 0000 0000 0000. All the non-AP MLDs are advised to adjust STAs 1 and STAs 3 to the active mode and STAs 2 to the power save mode. Therefore, it is ensured that no STAs on link 1 and link 3 are set in the power save mode, so that AP 1 and AP 3 are not required to buffer the groupcast data frame, and the delay is solved.
Method 2: the AP MLD actively transmits an ML power management request frame, where a multi-link power management Bitmap is set to 0100 0000 0000 0000. Then, non-AP MLD 1 is advised to adjust STA 1 and STA 3 to the active mode and STA 2 to the power save mode.

In an embodiment, if approving the adjustment method, non-AP MLD 1 replies with an ML power management response frame carrying a status of 0, indicating successful.

In an embodiment, if not approving the adjustment method, the non-AP MLD replies with an ML power management response frame carrying a status of 135 and an ML power management element, which encompasses a bitmap adjustment method recommended by the non-AP MLD. The AP MLD may re-initiate the request through a recommended bitmap subsequently or initiate new requests for multiple non-AP MLDs in comprehensive consideration of the power management mode of non-AP MLD 2.

In an actual target link selection solution, the impact factor is not limited to a single factor, and multiple impact factors may jointly act on the target link selection solution. With the application of target link selection criterion 2 as an example, the impact factor on the target link selection solution is described as follows.

In an embodiment, from the perspective of power save (equivalent to the above power consumption information), operation links of legacy STA 1 and legacy STA 2 are adjusted to be the same link. Therefore, the power management mode for the non-AP MLD is only required to maintain the link in the active mode without maintaining multiple links in the active mode, so that a power save effect is realized. For example, if link 1 is selected as the target link, the AP switches legacy STA 2 to link 1 through a band steering function, etc. If it is determined at the AP that the multi-link power management Bitmap is set to 0110 0000 0000 0000, the link power management state of the non-AP MLD is adjusted through method 1 or method 2.

In an embodiment, from the perspective of interference (equivalent to the interference information), for example, if link 1 and link 2 have more interference and are not suitable for groupcast transmission through link information collection in an early stage, link 3 has less interference. For example, if link 3 is taken as the target link, the AP may switch legacy STA 1 to link 3 through the band steering function, etc. Alternatively, if it is determined at the AP that the multi-link power management Bitmap is set to 1100 0000 0000 0000, the link power management state of the non-AP MLD is adjusted through method 1 or method 2.

In an embodiment, from the perspective of a load (equivalent to the above load information), for example, if link 1 has more interference, legacy STA 1 and legacy STA 2 perform unicast data interaction having a high throughput while receiving groupcast. For example, if link 2 and link 3 are taken as the target links respectively, the AP switches legacy STA 1 to link 2 through the band steering function, etc. Alternatively, if it is determined at the AP that the multi-link power management Bitmap is set to 1000 0000 0000 0000, the link power management state of the non-AP MLD is adjusted through method 1 or method 2.

In an embodiment, from the perspective of compatibility (equivalent to the above STA compatibility information), in the instance from the perspective of power save, owing to the limitation on compatibility, legacy STA 2 is not capable of operating on link 1 and link 2. For example, if link 3 is taken as the target link, the AP switches legacy STA 1 to link 3 through the band steering function, etc. Alternatively, if it is determined at the AP that the multi-link power management Bitmap is set to 1100 0000 0000 0000, the link power management state of the non-AP MLD is adjusted through method 1 or method 2.

The groupcast delay determination criteria for the legacy STA and the non-AP MLD respectively, the target link selection criterion including the single choice criterion and the comprehensive factor based choice criterion, and the method for coordinating the power management mode of the non-AP MLD are provided in the above examples.

The method for coordinating the power management mode of the non-AP MLD includes: method 1, the AP MLD transmits a bitmap carried in a broadcast beacon frame to advise all the non-AP MLDs to adjust the power management mode of each link as required; and method 2, the AP MLD adjusts the power management mode through the unicast action frame and negotiation with the non-AP MLD.

New frame structures are invented for these two methods respectively. For method 1, the multi-link power management (MLPM) is newly added to the A-control field. For method 2, the ML power management request frame and the ML power management response frame are newly added to the action frame.

Through the above description of the embodiments, those skilled in the art can clearly understand that the method in the above example can be implemented in combination of software and a necessary general-purpose hardware platform, and can certainly be implemented through hardware. However, the former is a preferred embodiment in many cases. Based on such understanding, the technical solution in essence of the disclosure or the part that contributes to the prior art can be embodied in the form of software products. The computer software product is stored in a storage medium (such as a read-only memory (ROM)/a random access memory (RAM), a magnetic disk, or an optical disk), and includes several instructions to make a terminal device (such as a mobile phone, a computer, a server, or a network device) execute the method in each example of the disclosure.

An apparatus for adjusting an operation mode is further provided In the embodiment. The apparatus is configured to implement the above example and some other embodiments, the repetitions of which will not be described in detail herein. As used below, the term "module" can be a combination of software and/or hardware that implements a preset function. While the device described in the following example is preferably implemented through software, it is possible to conceive that the device can be implemented through hardware or a combination of the software and the hardware.

Fig. 8 is a structural block diagram of an apparatus for adjusting an operation mode In an embodiment of the disclosure. As shown in the Fig. 8, the apparatus for adjusting an operation mode includes:
a determination module 802 configured to determine a target link from multiple links established between an access point (AP) and a station (STA), where the access point (AP) is positioned in an AP multi-link device (MLD), the station (STA) is positioned in a non-access point (non-AP) MLD, and the target link has groupcast transmission delay; and
an adjustment module 804 configured to determine a target station corresponding to the target link and set in a power save mode, and adjust an operation mode of the target station from the power save mode to an active mode, so that all stations corresponding to the target link are in the active mode.

In the embodiment of the disclosure, the target link is determined from the multiple links established between the access point (AP) and the station (STA); and the target station corresponding to the target link and set in the power save mode is determined, and the operation mode of the target station is adjusted from the power save mode to the active mode, so that all the stations corresponding to the target link are in the active mode. Accordingly, groupcast transmission delay that is likely to be caused by different power operation modes of the stations is solved.

In an embodiment, the above determination module is further configured to acquire operation modes of all stations on the multiple links established between the access point (AP) and the station (STA), where the operation modes include at least one of the active mode and the power save mode; determine at least one link having groupcast transmission delay from the multiple links according to the operation modes of all the stations; and determine the target link from the at least one link according to a preset selection criterion.

In an embodiment, the above apparatus for adjusting an operation mode further includes a first determination module configured to determine, in a case that a legacy STA associated with an AP corresponding to any one of the multiple links is determined, an operation mode of the legacy STA is the active mode, and an STA corresponding to any one of the multiple links and positioned in the non-AP MLD is in the power save mode, any one of the multiple links as at least one link having groupcast transmission delay.

In an embodiment, the above apparatus for adjusting an operation mode further includes a second determination module configured to determine, in a case that an operation mode of an STA in non-AP MLD 1 corresponding to any one of the multiple links is the active mode, and an operation mode of an STA in non-AP MLD 2 corresponding to any one of the multiple links is the power save mode, any one of the multiple links as at least one link having groupcast transmission delay.

In an embodiment, the above apparatus for adjusting an operation mode further includes a third determination module configured to determine, in a case that any one of the multiple links has the groupcast transmission delay, the non-AP MLD corresponding to the multiple links as having groupcast transmission delay.

It should be noted that In an embodiment, the multiple links established between the access point (AP) and the station (STA) may transmit the same message and serve as backup communication links for one another. Accordingly, only in response to determining that the multiple links have the groupcast delay, the target link is determined from the multiple links.

In an embodiment, the above apparatus for adjusting an operation mode further includes a fourth determination module configured to acquire a link scenario of the at least one link; determine, in a case that the link scenario encompasses a legacy STA and the non-AP MLD, a link where the legacy STA is positioned as the target link; and/or determine, in a case that the link scenario encompasses multiple non-AP MLDs, a link where a non-AP MLD whose operation mode is the active mode is positioned as the target link.

In an embodiment, the above apparatus for adjusting an operation mode further includes an acquisition module configured to acquire, in a case that the at least one link indicates multiple links, parameter information of the at least one link, where the parameter information includes at least one of power consumption information, interference information, load information, STA compatibility information, and priority information; and determine the target link from the at least one link according to the parameter information.

In an embodiment, the above apparatus for adjusting an operation mode further includes a fifth determination module configured to determine an operation mode of the at least one link as the active mode in a case that the parameter information is the power consumption information; and switch the link through a link switch function to maintain an operation mode of only one of the at least one link as the active mode, and take the one link whose operation mode is the active mode as the target link.

In an embodiment, the above apparatus for adjusting an operation mode further includes a sixth determination module configured to determine, in a case that the parameter information is the interference information, one link having minimum interference from the at least one link according to the interference information; and determine the one link having minimum interference as the target link.

In an embodiment, the above apparatus for adjusting an operation mode further includes a seventh determination module configured to determine, in a case that the parameter information is the load information, one link having a minimum load from the at least one link according to the load information; and determine the one link having a minimum load as the target link.

In an embodiment, the above apparatus for adjusting an operation mode further includes an eighth determination module configured to determine, in a case that the parameter information is the STA compatibility information, one link allowed to be compatible with the STA from the at least one link according to the STA compatibility information; and determine the one link allowed to be compatible with the STA as the target link.

In an embodiment, the above apparatus for adjusting an operation mode further includes a ninth determination module configured to determine, in a case that the parameter information is the priority information, one link whose priority information is a first priority from the at least one link according to the priority information, where the first priority is configured to denote a priority of a legacy STA; and determine the one link whose priority information is the first priority as the target link.

In an embodiment, the above adjustment module is further configured to carry a multi-link power management (MLPM) bitmap field in a beacon frame, where a first value in the MLPM bitmap field is configured to indicate the active mode, and a second value in the MLPM bitmap field is configured to indicate the power save mode; and transmit the beacon frame carrying the MLPM bitmap field to a non-AP MLD where the target station is positioned, and instruct the non-AP MLD where the target workstation is positioned to adjust the operation mode of the target station from the power save mode to the active mode according to the beacon frame carrying the MLPM bitmap field.

In an embodiment, the above apparatus for adjusting an operation mode further includes a transmission module configured to transmit a multi-link power management request frame to a non-AP MLD where the target station is positioned, where the multi-link power management request frame is configured to instruct the non-AP MLD where the target station is positioned to adjust the operation mode of the target station from the power save mode to the active mode; receive, in a case that the non-AP MLD where the target station is positioned approves an adjustment of the operation mode of the target station from the power save mode to the active mode, response information transmitted by the non-AP MLD where the target station is positioned, so that the non-AP MLD where the target station is positioned is determined as confirming the adjustment of the operation mode of the target station from the power save mode to the active mode; and receive, in a case that the non-AP MLD where the target station is positioned does not approve an adjustment of the operation mode of the target station from the power save mode to the active mode, a recommended adjustment mode transmitted by the non-AP MLD where the target workstation is positioned, where the recommended adjustment mode is configured to indicate station 1 adjusted from the power save mode to the active mode and station 2 adjusted from the active mode to the power save mode under an approval from the non-AP MLD where the target station is positioned.

In an embodiment, the above computer-readable storage medium may include, but is not limited to, various media capable of storing a computer program, such as a universal serial bus (USB) flash disk, a read-only memory (ROM), a random access memory (RAM), a mobile hard disk, a magnetic disk, or an optical disk.

Reference may be made to the instances described in the above example and some other embodiments for the specific instances In the embodiment, which will not be repeated In the embodiment.

An electronic apparatus is further provided In an embodiment of the disclosure. The electronic apparatus includes a memory and a processor, where the memory stores a computer program, and the processor is configured to execute steps of any method example described above when running the computer program.

In some instances of the embodiment, through the computer program, the above processor may be configured to:
S1, determine a target link from multiple links established between an access point (AP) and a station (STA), where the access point (AP) is positioned in an AP multi-link device (MLD), the station (STA) is positioned in a non-access point (non-AP) MLD, and the target link has groupcast transmission delay; and
S2, determine a target station corresponding to the target link and set in a power save mode, and adjust an operation mode of the target station from the power save mode to an active mode, so that all stations corresponding to the target link are in the active mode. In an embodiment, the above electronic apparatus may further include a transmission device and an input/output device, where the transmission device and the input/output device are connected to the above processor.

Reference may be made to the instances described in the above example and some other embodiments for the specific instances In the embodiment, which will not be repeated In the embodiment.

In the disclosure, the target link is determined from the multiple links established between the access point (AP) and the station (STA); and the target station corresponding to the target link and set in the power save mode is determined, and the operation mode of the target station is adjusted from the power save mode to the active mode, so that all the stations corresponding to the target link are in the active mode. Accordingly, groupcast transmission delay that is likely to be caused by different power operation modes of the stations is solved.

Apparently, those skilled in the art should understand that all the modules or steps above of the disclosure can be implemented through a general-purpose computation apparatus, centralized on a single computation apparatus or distributed over a network composed of a plurality of computation apparatuses, and implemented through program codes executable by the computation apparatus. Therefore, the modules or steps can be stored in a storage apparatus to be executed by the computation apparatus. In some cases, the steps shown or described can be executed in a different order from herein. Alternatively, some or all of the modules or the steps can be implemented by fabricating same into individual integrated circuit modules separately. In this way, the disclosure is not limited to any particular combination of hardware and software.

## Claims

1. A method for adjusting an operation mode, comprising:
determining (S602) a target link from multiple links established between an access point, AP, and a station, STA, wherein the AP is positioned in an AP Multi-Link Device, MLD, the STA is positioned in a non-AP MLD, and the target link has groupcast transmission delay; and
determining (S604) a target station corresponding to the target link and set in a power save mode, and adjusting an operation mode of the target station from the power save mode to an active mode, so that all stations corresponding to the target link are in the active mode;
wherein the determining a target link from multiple links established between an AP and a STA comprises:
acquiring operation modes of all stations on the multiple links established between the AP and the STA, wherein the operation modes comprise at least one of the active mode and the power save mode;
determining at least one link having groupcast transmission delay from the multiple links according to the operation modes of all the stations; and
determining the target link from the at least one link according to a preset selection criterion.

2. The method for adjusting an operation mode according to claim 1, wherein the determining at least one link having groupcast transmission delay from the multiple links according to the operation modes of all the stations comprises:
determining, in a case that a legacy STA associated with an AP corresponding to any one of the multiple links is determined, an operation mode of the legacy STA is the active mode, and an STA corresponding to any one of the multiple links and positioned in the non-AP MLD is in the power save mode, any one of the multiple links as at least one link having groupcast transmission delay.

3. The method for adjusting an operation mode according to claim 1 or 2, wherein the determining at least one link having groupcast transmission delay from the multiple links according to the operation modes of all the stations comprises:
determining, in a case that an operation mode of an STA in non-AP MLD 1 corresponding to any one of the multiple links is the active mode, and an operation mode of an STA in non-AP MLD 2 corresponding to any one of the multiple links is the power save mode, any one of the multiple links as at least one link having groupcast transmission delay.

4. The method for adjusting an operation mode according to claim 3, further comprising:
determining, in a case that any one of the multiple links has the groupcast transmission delay, the non-AP MLD corresponding to the multiple links as having groupcast transmission delay.

5. The method for adjusting an operation mode according to claim 1, wherein the determining the target link from the at least one link according to a preset selection criterion comprises:
acquiring a link scenario of the at least one link;
determining, in a case that the link scenario encompasses a legacy STA and the non-AP MLD, a link where the legacy STA is positioned as the target link; and/or
determining, in a case that the link scenario encompasses multiple non-AP MLDs, a link where a non-AP MLD whose operation mode is the active mode is positioned as the target link.

6. The method for adjusting an operation mode according to claim 1, wherein the determining the target link from the at least one link according to a preset selection criterion comprises:
acquiring, in a case that the at least one link indicates multiple links, parameter information of the at least one link, wherein the parameter information comprises at least one of power consumption information, interference information, load information, STA compatibility information, and priority information; and
determining the target link from the at least one link according to the parameter information.

7. The method for adjusting an operation mode according to claim 6, wherein the determining the target link from the at least one link according to the parameter information comprises:
determining an operation mode of the at least one link as the active mode in a case that the parameter information is the power consumption information; and
switching the link through a link switch function to maintain an operation mode of only one of the at least one link as the active mode, and taking the one link whose operation mode is the active mode as the target link.

8. The method for adjusting an operation mode according to claim 6, wherein the determining the target link from the at least one link according to the parameter information comprises:
determining, in a case that the parameter information is the interference information, one link having minimum interference from the at least one link according to the interference information; and
determining the one link having minimum interference as the target link.

9. The method for adjusting an operation mode according to claim 6, wherein the determining the target link from the at least one link according to the parameter information comprises:
determining, in a case that the parameter information is the load information, one link having a minimum load from the at least one link according to the load information; and
determining the one link having a minimum load as the target link.

10. The method for adjusting an operation mode according to claim 6, wherein the determining the target link from the at least one link according to the parameter information comprises:
determining, in a case that the parameter information is the STA compatibility information, one link allowed to be compatible with the STA from the at least one link according to the STA compatibility information; and
determining the one link allowed to be compatible with the STA as the target link.

11. The method for adjusting an operation mode according to claim 6, wherein the determining the target link from the at least one link according to the parameter information comprises:
determining, in a case that the parameter information is the priority information, one link whose priority information is a first priority from the at least one link according to the priority information, wherein the first priority is configured to denote a priority of a legacy STA; and
determining the one link whose priority information is the first priority as the target link.

12. The method for adjusting an operation mode according to claim 1, wherein the adjusting an operation mode of the target station from the power save mode to an active mode comprises:
carrying a multi-link power management, MLPM, bitmap field in a beacon frame, wherein a first value in the MLPM bitmap field is configured to indicate the active mode, and a second value in the MLPM bitmap field is configured to indicate the power save mode; and
transmitting the beacon frame carrying the MLPM bitmap field to a non-AP MLD where the target station is positioned, and instructing the non-AP MLD where the target workstation is positioned to adjust the operation mode of the target station from the power save mode to the active mode according to the beacon frame carrying the MLPM bitmap field;
or, wherein the adjusting an operation mode of the target station from the power save mode to an active mode comprises:
transmitting a multi-link power management request frame to a non-AP MLD where the target station is positioned, wherein the multi-link power management request frame is configured to instruct the non-AP MLD where the target station is positioned to adjust the operation mode of the target station from the power save mode to the active mode;
receiving, in a case that the non-AP MLD where the target station is positioned approves an adjustment of the operation mode of the target station from the power save mode to the active mode, response information transmitted by the non-AP MLD where the target station is positioned, so that the non-AP MLD where the target station is positioned is determined as confirming the adjustment of the operation mode of the target station from the power save mode to the active mode; and
receiving, in a case that the non-AP MLD where the target station is positioned does not approve an adjustment of the operation mode of the target station from the power save mode to the active mode, a recommended adjustment mode transmitted by the non-AP MLD where the target workstation is positioned, wherein the recommended adjustment mode is configured to indicate station 1 adjusted from the power save mode to the active mode and station 2 adjusted from the active mode to the power save mode under an approval from the non-AP MLD where the target station is positioned.

13. A computer-readable storage medium, storing a computer program, wherein the computer program is configured to, when executed by a processor, cause the processor to implement the method as claimed in any one of claims 1-12.

14. An electronic apparatus, comprising a memory and a processor, wherein the memory stores a computer program, and the processor is configured to execute the computer program to implement the method as claimed in any one of claims 1-12.

## Patentansprüche

1. Verfahren zur Betriebsmoduseinstellung, umfassend:
Bestimmen (S602) eines Ziellinks aus mehreren Links, die zwischen einem Zugangspunkt, AP, und einer Station, STA hergestellt werden, wobei der AP in einem AP-Multi-Link-Gerät, MLD, positioniert ist, die STA in einem Nicht-AP-MLD positioniert ist und der Ziellink eine Groupcastübertragungsverzögerung aufweist; und
Bestimmen (S604) einer Zielstation, die mit dem Ziellink übereinstimmt und in einen Energiesparmodus eingestellt wird, sowie Einstellen eines Betriebsmodus der Zielstation von dem Energiesparmodus in einen aktiven Modus, sodass sich alle Stationen, die mit dem Ziellink übereinstimmen, in dem aktiven Modus befinden;
wobei Bestimmen eines Ziellinks aus mehreren Links, die zwischen einem AP und einer STA hergestellt werden, umfasst:
Erfassen Betriebsmodi aller Stationen auf den mehreren Links, die zwischen dem AP und der STA hergestellt werden, wobei die Betriebsmodi mindestens einen aktiven Modus und einen Energiesparmodus umfassen;
Bestimmen mindestens eines Links aufweisend eine Groupcastübertragungsverzögerung aus den mehreren Links nach den Betriebsmodi aller Stationen; und
Bestimmen des Ziellinks aus dem mindestens einen Link nach einem voreingestellten Auswahlkriterium.

2. Verfahren zur Betriebsmoduseinstellung nach Anspruch 1, wobei Bestimmen mindestens eines Links aufweisend eine Groupcastübertragungsverzögerung aus den mehreren Links nach den Betriebsmodi aller Stationen umfasst:
Bestimmen, in einem Fall, dass eine Legacy-STA, die einem AP zugeordnet ist, der mit einem beliebigen der mehreren Links übereinstimmt, bestimmt wird, ein Betriebsmodus der Legacy-STA der aktive Modus ist und eine STA, die mit einem beliebigen der mehreren Links übereinstimmt und in dem Nicht-AP-MLD angeordnet ist, sich in dem Energiesparmodus befindet, eines beliebigen der mehreren Links als mindestens einen Link aufweisend Groupcastübertragungsverzögerung.

3. Verfahren zur Betriebsmoduseinstellung nach Anspruch 1 oder 2, wobei Bestimmen mindestens eines Links aufweisend Groupcastübertragungsverzögerung aus den mehreren Links nach den Betriebsmodi aller Stationen umfasst:
Bestimmen, in einem Fall, dass ein Betriebsmodus einer STA in dem Nicht-AP-MLD 1, die mit einem beliebigen der mehreren Links übereinstimmt, der aktive Modus ist und ein Betriebsmodus einer STA in dem Nicht-AP-MLD 2, die mit einem beliebigen der mehreren Links übereinstimmt, der Energiesparmodus ist, eines beliebigen der mehreren Links als mindestens einen Link aufweisend Groupcastübertragungsverzögerung.

4. Verfahren zur Betriebsmoduseinstellung nach Anspruch 3, ferner umfassend:
Bestimmen, in einem Fall, dass ein beliebiger der mehreren Links die Groupcastübertragungsverzögerung aufweist, des Nicht-AP-MLD, das mit den mehreren Links übereinstimmt, als aufweisend Groupcastübertragungsverzögerung.

5. Verfahren zur Betriebsmoduseinstellung nach Anspruch 1, wobei Bestimmen des Ziellinks aus dem mindestens einen Link nach einem voreingestellten Auswahlkriterium umfasst:
Erfassen eines Link-Szenarios des mindestens eines Links;
Bestimmen, in einem Fall, dass das Link-Szenario eine Legacy-STA und das Nicht-AP-MLD umfasst, eines Links, in dem die Legacy-STA positioniert ist, als Ziellink; und/oder
Bestimmen, in einem Fall, dass das Link-Szenario mehrere Nicht-AP-MLD umfasst, eines Links, in dem ein Nicht-AP-MLD, dessen Betriebsmodus der aktive Modus ist, als Ziellink positioniert ist.

6. Verfahren zur Betriebsmoduseinstellung nach Anspruch 1, wobei Bestimmen des Ziellinks aus dem mindestens einen Link nach einem voreingestellten Auswahlkriterium umfasst:
Erfassen, in einem Fall, dass der mindestens ein Link mehrere Links anzeigt, Parameterinformationen des mindestens eines Links, wobei die Parameterinformationen mindestens eine der folgenden Informationen umfassen: Energieverbrauchsinformationen, Interferenzinformationen, Belastungsinformationen, STA-Kompatibilitätsinformationen und Prioritätsinformationen; und
Bestimmen des Ziellinks aus dem mindestens einen Link nach den Parameterinformationen.

7. Verfahren zur Betriebsmoduseinstellung nach Anspruch 6, wobei Bestimmen des Ziellinks aus dem mindestens einen Link nach den Parameterinformationen umfasst:
Bestimmen eines Betriebsmodus des mindestens eines Links als aktiven Modus, in einem Fall, dass die Parameterinformationen Energieverbrauchsinformationen sind; und
Umschalten des Links mittels einer Link-Umschaltfunktion, um den Betriebsmodus nur eines der mindestens eines Links als aktiven Modus zu halten, und Berücksichtigen des einen Links, dessen Betriebsmodus der aktive Modus ist, als Ziellink.

8. Verfahren zur Betriebsmoduseinstellung nach Anspruch 6, wobei Bestimmen des Ziellinks aus dem mindestens einen Link nach den Parameterinformationen umfasst:
Bestimmen, in einem Fall, dass die Parameterinformationen Interferenzinformationen sind, eines Links aufweisend Minimalinterferenz aus dem mindestens einen Link nach den Interferenzinformationen; und
Bestimmen des Links aufweisend Minimalinterferenz als Ziellink.

9. Verfahren zur Betriebsmoduseinstellung nach Anspruch 6, wobei Bestimmen des Ziellinks aus dem mindestens einen Link nach den Parameterinformationen umfasst:
Bestimmen, in einem Fall, dass die Parameterinformationen Belastungsinformationen sind, eines Links aufweisend eine Minimalbelastung aus dem mindestens einen Link nach den Belastungsinformationen; und
Bestimmen des Links aufweisend eine Minimalbelastung als Ziellink.

10. Verfahren zur Betriebsmoduseinstellung nach Anspruch 6, wobei Bestimmen des Ziellinks aus dem mindestens einen Link nach den Parameterinformationen umfasst:
Bestimmen, in einem Fall, dass die Parameterinformationen STA-Kompatibilitätsinformationen sind, eines Links, der mit der STA kompatibel sein darf, aus dem mindestens einen Link nach den STA-Kompatibilitätsinformationen; und
Bestimmen des Links, der mit der STA kompatibel sein darf, als Ziellink.

11. Verfahren zur Betriebsmoduseinstellung nach Anspruch 6, wobei Bestimmen des Ziellinks aus dem mindestens einen Link nach den Parameterinformationen umfasst:
Bestimmen, in einem Fall, dass die Parameterinformationen Prioritätsinformationen sind, eines Links, dessen Prioritätsinformationen eine erste Priorität besitzen, aus dem mindestens einen Link nach den Prioritätsinformationen, wobei die erste Priorität dazu konfiguriert ist, eine Priorität einer Legacy-STA anzuzeigen; und
Bestimmen des Links, dessen Prioritätsinformationen die erste Priorität besitzen, als Ziellink.

12. Verfahren zur Betriebsmoduseinstellung nach Anspruch 1, wobei Einstellen eines Betriebsmodus der Zielstation von dem Energiesparmodus in einen aktiven Modus umfasst:
Tragen eines Multi-Link-Leistungsverwaltungs-Bitmap-Feldes, MLPM, in einem Beacon-Rahmen, wobei ein erster Wert in dem MLPM-Bitmap-Feld dazu konfiguriert ist, den aktiven Modus anzuzeigen, und ein zweiter Wert in dem MLPM-Bitmap-Feld dazu konfiguriert ist, den Energiesparmodus anzuzeigen; und
Übertragen des Beacon-Rahmens, der das MLPM-Bitmap-Feld trägt, an ein Nicht-AP-MLD, in dem die Zielstation positioniert ist, und Anweisen des Nicht-AP-MLD, in dem die Zielarbeitsstation positioniert ist, den Betriebsmodus der Zielstation von dem Energiesparmodus in den aktiven Modus nach dem Beacon-Rahmen, der das MLPM-Bitmap-Feld trägt, einzustellen;
oder wobei Einstellen eines Betriebsmodus der Zielstation von dem Energiesparmodus in einen aktiven Modus umfasst:
Übertragen eines Multi-Link-Leistungsverwaltungs-Anforderungsrahmens an ein Nicht-AP-MLD, in dem die Zielstation positioniert ist, wobei der Multi-Link-Leistungsverwaltungs-Anforderungsrahmen dazu konfiguriert ist, das Nicht-AP-MLD, in dem die Zielstation positioniert ist, anzuweisen, den Betriebsmodus der Zielstation von dem Energiesparmodus in den aktiven Modus einzustellen;
Empfangen, in einem Fall, dass das Nicht-AP-MLD, in dem die Zielstation positioniert ist, eine Einstellung des Betriebsmodus der Zielstation von dem Energiesparmodus in den aktiven Modus genehmigt, Antwortinformationen, die von dem Nicht-AP-MLD, in dem die Zielstation positioniert ist, übertragen werden, sodass das Nicht-AP-MLD, in dem die Zielstation positioniert ist, als bestätigend der Einstellung des Betriebsmodus der Zielstation von dem Energiesparmodus in den aktiven Modus bestimmt wird; und
Empfangen, in einem Fall, dass das Nicht-AP-MLD, in dem die Zielstation positioniert ist, eine Einstellung des Betriebsmodus der Zielstation von dem Energiesparmodus in den aktiven Modus nicht genehmigt, eines empfohlenen Einstellungsmodus, der von dem Nicht-AP-MLD, in dem die Zielstation positioniert ist, übertragen wird, wobei der empfohlene Einstellungsmodus dazu konfiguriert ist, anzuzeigen, dass Station 1 von dem Energiesparmodus in den aktiven Modus eingestellt wird und Station 2 von dem aktiven Modus in den Energiesparmodus eingestellt wird, unter einer Genehmigung von dem Nicht-AP-MLD, in dem die Zielstation positioniert ist.

13. Computerlesbares Speichermedium, das ein Computerprogramm speichert, wobei das Computerprogramm dazu konfiguriert ist, wenn durch einen Prozessor ausgeführt wird, den Prozessor zu veranlassen, das Verfahren nach einem der Ansprüche 1 bis 12 zu implementieren.

14. Elektronische Vorrichtung, umfassend einen Speicher und einen Prozessor, wobei der Speicher ein Computerprogramm speichert und der Prozessor dazu konfiguriert ist, das Computerprogramm auszuführen, um das Verfahren nach einem der Ansprüche 1 bis 12 zu implementieren.

## Revendications

1. Procédé de réglage d'un mode de fonctionnement, comprenant :
la détermination (S602) d'un lien cible parmi plusieurs liens établis entre un point d'accès, AP, et une station, STA, dans lequel l'AP est positionné dans un dispositif multi-liaison AP, MLD, la STA est positionnée dans un MLD non-AP, et le lien cible présente un délai de transmission en diffusion de groupe ; et
la détermination (S604) d'une station cible correspondant au lien cible et réglée en mode d'économie d'énergie, et le réglage d'un mode de fonctionnement de la station cible du mode d'économie d'énergie vers un mode actif, de sorte que toutes les stations correspondant au lien cible soient en mode actif ;
dans lequel la détermination d'un lien cible parmi plusieurs liens établis entre un AP et une STA comprend :
l'acquisition des modes de fonctionnement de toutes les stations sur les plusieurs liens établis entre l'AP et la STA, dans lequel les modes de fonctionnement comprennent au moins l'un d'un mode actif et d'un mode d'économie d'énergie ;
la détermination d'au moins un lien présentant un délai de transmission en diffusion de groupe parmi les plusieurs liens selon les modes de fonctionnement de toutes les stations ; et
la détermination du lien cible à partir de l'au moins un lien selon un critère de sélection prédéfini.

2. Procédé de réglage d'un mode de fonctionnement selon la revendication 1, dans lequel la détermination d'au moins un lien présentant un délai de transmission en diffusion de groupe parmi les plusieurs liens selon les modes de fonctionnement de toutes les stations comprend :
la détermination, dans le cas où une STA héritée associée à un AP correspondant à l'un quelconque des plusieurs liens est déterminée, que le mode de fonctionnement de la STA héritée est le mode actif, et qu'une STA correspondant à l'un quelconque des plusieurs liens et positionnée dans le MLD non-AP est en mode d'économie d'énergie, de l'un quelconque des plusieurs liens comme au moins un lien présentant un délai de transmission en diffusion de groupe.

3. Procédé de réglage d'un mode de fonctionnement selon la revendication 1 ou 2, dans lequel la détermination d'au moins un lien présentant un délai de transmission en diffusion de groupe parmi les plusieurs liens selon les modes de fonctionnement de toutes les stations comprend :
la détermination, dans le cas où un mode de fonctionnement d'une STA dans le MLD non-AP 1 correspondant à l'un quelconque des plusieurs liens est le mode actif, et où un mode de fonctionnement d'une STA dans le MLD non-AP 2 correspondant à l'un quelconque des plusieurs liens est le mode d'économie d'énergie, de l'un quelconque des plusieurs liens comme au moins un lien présentant un délai de transmission en diffusion de groupe.

4. Procédé de réglage d'un mode de fonctionnement selon la revendication 3, comprenant en outre :
la détermination, dans le cas où l'un quelconque des plusieurs liens présente le délai de transmission en diffusion de groupe, du MLD non-AP correspondant aux plusieurs liens comme présentant un délai de transmission en diffusion de groupe.

5. Procédé de réglage d'un mode de fonctionnement selon la revendication 1, dans lequel la détermination du lien cible à partir de l'au moins un lien selon un critère de sélection prédéfini comprend :
l'acquisition d'un scénario de liaison de l'au moins un lien ;
la détermination, dans le cas où le scénario de liaison englobe une STA héritée et le MLD non-AP, d'un lien dans lequel la STA héritée est positionnée comme lien cible ; et/ou
la détermination, dans le cas où le scénario de liaison englobe plusieurs MLD non-AP, d'un lien dans lequel est positionné un MLD non-AP dont le mode de fonctionnement est le mode actif comme lien cible.

6. Procédé de réglage d'un mode de fonctionnement selon la revendication 1, dans lequel la détermination du lien cible à partir de l'au moins un lien selon un critère de sélection prédéfini comprend :
l'acquisition, dans le cas où l'au moins un lien indique plusieurs liens, d'informations de paramètres de l'au moins un lien, dans lequel les informations de paramètres comprennent au moins l'une des informations de consommation d'énergie, des informations d'interférence, des informations de charge, des informations de compatibilité de STA et des informations de priorité ; et
la détermination du lien cible à partir de l'au moins un lien selon les informations de paramètres.

7. Procédé de réglage d'un mode de fonctionnement selon la revendication 6, dans lequel la détermination du lien cible à partir de l'au moins un lien selon les informations de paramètres comprend :
la détermination d'un mode de fonctionnement de l'au moins un lien comme mode actif dans le cas où les informations de paramètres sont des informations de consommation d'énergie ; et
la commutation du lien au moyen d'une fonction de commutation de lien afin de maintenir un mode de fonctionnement d'un seul parmi l'au moins un lien comme mode actif, et la prise du lien dont le mode de fonctionnement est le mode actif comme lien cible.

8. Procédé de réglage d'un mode de fonctionnement selon la revendication 6, dans lequel la détermination du lien cible à partir de l'au moins un lien selon les informations de paramètres comprend :
la détermination, dans le cas où les informations de paramètres sont des informations d'interférence, d'un lien présentant une interférence minimale parmi l'au moins un lien selon les informations d'interférence ; et
la détermination du lien présentant l'interférence minimale comme lien cible.

9. Procédé de réglage d'un mode de fonctionnement selon la revendication 6, dans lequel la détermination du lien cible à partir de l'au moins un lien selon les informations de paramètres comprend :
la détermination, dans le cas où les informations de paramètres sont des informations de charge, d'un lien présentant une charge minimale parmi l'au moins un lien selon les informations de charge ; et
la détermination du lien présentant la charge minimale comme lien cible.

10. Procédé de réglage d'un mode de fonctionnement selon la revendication 6, dans lequel la détermination du lien cible à partir de l'au moins un lien selon les informations de paramètres comprend :
la détermination, dans le cas où les informations de paramètres sont des informations de compatibilité de STA, d'un lien autorisé à être compatible avec la STA parmi l'au moins un lien selon les informations de compatibilité de STA ; et
la détermination du lien autorisé à être compatible avec la STA comme lien cible.

11. Procédé de réglage d'un mode de fonctionnement selon la revendication 6, dans lequel la détermination du lien cible à partir de l'au moins un lien selon les informations de paramètres comprend :
la détermination, dans le cas où les informations de paramètres sont des informations de priorité, d'un lien dont les informations de priorité correspondent à une première priorité parmi l'au moins un lien selon les informations de priorité, dans lequel la première priorité est configurée pour indiquer une priorité d'une STA héritée ; et
la détermination du lien dont les informations de priorité correspondent à la première priorité comme lien cible.

12. Procédé de réglage d'un mode de fonctionnement selon la revendication 1, dans lequel le réglage d'un mode de fonctionnement de la station cible du mode d'économie d'énergie vers un mode actif comprend :
le portage d'un champ bitmap de gestion de puissance multi-liaison, MLPM, dans une trame de balise, dans lequel une première valeur dans le champ bitmap MLPM est configurée pour indiquer le mode actif, et une seconde valeur dans le champ bitmap MLPM est configurée pour indiquer le mode d'économie d'énergie ; et
la transmission de la trame de balise portant le champ bitmap MLPM vers un MLD non-AP dans lequel la station cible est positionnée, et l'instruction donnée au MLD non-AP dans lequel la station cible est positionnée d'ajuster le mode de fonctionnement de la station cible du mode d'économie d'énergie vers le mode actif selon la trame de balise portant le champ bitmap MLPM ;
ou, dans lequel le réglage d'un mode de fonctionnement de la station cible du mode d'économie d'énergie vers un mode actif comprend :
la transmission d'une trame de requête de gestion de puissance multi-liaison vers un MLD non-AP dans lequel la station cible est positionnée, dans lequel la trame de requête de gestion de puissance multi-liaison est configurée pour instruire le MLD non-AP dans lequel la station cible est positionnée d'ajuster le mode de fonctionnement de la station cible du mode d'économie d'énergie vers le mode actif ;
la réception, dans le cas où le MLD non-AP dans lequel la station cible est positionnée approuve un ajustement du mode de fonctionnement de la station cible du mode d'économie d'énergie vers le mode actif, d'informations de réponse transmises par le MLD non-AP dans lequel la station cible est positionnée, de sorte que le MLD non-AP dans lequel la station cible est positionnée soit déterminé comme confirmant l'ajustement du mode de fonctionnement de la station cible du mode d'économie d'énergie vers le mode actif ; et
la réception, dans le cas où le MLD non-AP dans lequel la station cible est positionnée n'approuve pas un ajustement du mode de fonctionnement de la station cible du mode d'économie d'énergie vers le mode actif, d'un mode d'ajustement recommandé transmis par le MLD non-AP dans lequel la station cible est positionnée, dans lequel le mode d'ajustement recommandé est configuré pour indiquer qu'une station 1 est ajustée du mode d'économie d'énergie vers le mode actif et qu'une station 2 est ajustée du mode actif vers le mode d'économie d'énergie avec une approbation du MLD non-AP dans lequel la station cible est positionnée.

13. Support de stockage lisible par ordinateur, stockant un programme informatique, dans lequel le programme informatique est configuré pour, lorsqu'il est exécuté par un processeur, amener le processeur à mettre en œuvre le procédé selon l'une quelconque des revendications 1 à 12.

14. Appareil électronique, comprenant une mémoire et un processeur, dans lequel la mémoire stocke un programme informatique, et le processeur est configuré pour exécuter le programme informatique afin de mettre en œuvre le procédé selon l'une quelconque des revendications 1 à 12.
